# EUROPÄISCHE PATENTSCHRIFT

(11) **EP 3 800 622 B1**
(45) Veröffentlichungstag und Bekanntmachung des Hinweises auf die Patenterteilung: **24.01.2024**
(21) Anmeldenummer: 20199520.6
(22) Anmeldetag: 01.10.2020
(51) Int. Cl.: G08G 1/052, G01P 3/38, G08G 1/054, G01P 3/68

(54) **VERFAHREN UND VORRICHTUNG ZUM AUFZEICHNEN EINER VERKEHRSSITUATION BEI DER VORBEIFAHRT EINES FAHRZEUGS AN EINEM AUFZEICHNUNGSGERÄT**
METHOD AND DEVICE FOR RECORDING A TRAFFIC SITUATION WHEN A VEHICLE PASSES A RECORDING APPARATUS
PROCÉDÉ ET DISPOSITIF D'ENREGISTREMENT D'UNE SITUATION DE CIRCULATION AU PASSAGE D'UN VÉHICULE DEVANT UN APPAREIL D'ENREGISTREMENT

(30) Priorität: 02.10.2019 DE 102019126562
(43) Veröffentlichungstag der Anmeldung: 07.04.2021
(73) Patentinhaber: Jenoptik Robot GmbH, 40789 Monheim (DE)
(72) Erfinder: Trummer, Michael, 31137 Hildesheim (DE)
(74) Vertreter: Waldauf, Alexander

(56) Entgegenhaltungen:
- WO-A1-2010/043252
- DE-A1- 4 330 349
- DE-A1-102012 219 220
- KR-A- 20050 048 961
- KR-A- 20080 087 618

## Beschreibung

Der hier vorgestellte Ansatz schafft ein Verfahren und eine Vorrichtung zum Aufzeichnen einer Verkehrssituation bei der Vorbeifahrt eines Fahrzeugs an einem Aufzeichnungsgerät gemäß den Hauptansprüchen.

In herkömmlichen Aufzeichnungsgeräten zum Überwachen einer Verkehrssituation, speziell zur Überwachung von Geschwindigkeitsübertretungen im Straßenverkehr, wird oftmals mittels eines Radarstrahls oder eines Laserstrahls eine aktuelle Geschwindigkeit eines Fahrzeugs erfasst und, wenn diese Geschwindigkeit höher ist, als eine örtlich zulässige Maximalgeschwindigkeit, ein Foto des Fahrzeugs (günstiger Weise samt Fahrer) aufgenommen, um diese Geschwindigkeitsübertretung gerichtsfest zu dokumentieren. Hierzu wird die vom Aufzeichnungsgerät erfasste Geschwindigkeit in diesem Foto eingeblendet, sodass eine Geschwindigkeitsübertretungen ahndende Stelle einen Bußgeldbescheid oder eine entsprechende Strafe erlassen kann. Problematisch kann jedoch ein Szenario sein, bei der eine Person, die die Geschwindigkeitsübertretung begangen hat, die im Foto eingeblendete, vom Aufzeichnungsgerät erfasste Geschwindigkeit anzweifelt und verifizieren möchte. Zwar wurden die Aufzeichnungsgeräte, die zur Überwachung von Geschwindigkeitsübertretungen im Straßenverkehr verwendet werden, durch Zertifizierungsbehörden wie die physikalischtechnische Bundesanstalt in der Bundesrepublik Deutschland zertifiziert bzw. durch entsprechende Eichämter geeicht, dennoch reicht manchen Fahrern oder selbst Richtern eine solche, unabhängige Prüfung der Überwachung der Geschwindigkeitsübertretungen verwendeten Aufzeichnungsgeräte nicht aus. Aus diesem Grund besteht ein Bedürfnis, bei einer erkannten Geschwindigkeitsübertretung eines Fahrzeugs einen Verkehrssituationsdatensatz zu generieren, bei dem neben der mit sehr exakten physikalischen Methoden wie einer Radar- , Lidar- oder Lasermessung erfassten Geschwindigkeit auch Informationen enthalten sind, die die tatsächliche Geschwindigkeit für den der Geschwindigkeitsübertretung beschuldigten Fahrer oder einen Richter plausibilisierbar machen.

In der DE 10 2012 219 220 A1 wird ein Verfahren beschrieben, welches mittels zwei Kameraaufnahmen eines vorbeifahrenden Fahrzeugs zu unterschiedlichen Zeitpunkten eine Geschwindigkeitsabschätzung vornimmt durch Vermessung von Längen bzw. Breiten oder Strecken zwischen Punkten, welche auf der Kontur des Fahrzeugs liegen.

Die WO 2010 7 043 252 A1 beschreibt ein Verfahren zur Geschwindigkeitsermittlung Mittels mindestens zwei Bildern und einer Rechner-Prozessoptimierung, so dass für die Ermittlung des Rechenwertes der Geschwindigkeit von der im ersten Bild enthaltenen Bildinformation nur ein Teil und von der im zweiten Bild enthaltenen Bildinformation die gesamte Bildinformation ausgelesen wird. Somit entsteht eine Darstellung von ein und demselben Fahrzeug in genau einem Bild, wobei in einer Teildarstellung nur ein Teilstück des Fahrzeugs dargestellt wird. Es wird zusätzlich eine Referenzlängenbestimmung mittels genormten Kennzeichenabmessungen vorgeschlagen.

Die KR 10 2008 0 087 618 A beschreibt ein Verfahren, welches ebenfalls zur Ermittlung einer Geschwindigkeit dient mittels mehreren Fotos unter Zuhilfenahme der vorderen und hinteren Fahrzeugkannte und einer daraus ermittelten Fahrzeuglänge, die in die Geschwindigkeitsberechnung mit eingeht.

In der DE 43 30 349 A1 wird ein Verfahren beschrieben zur Ermittlung der Geschwindigkeit von Fahrzeugen, wobei die Anwesenheit des Fahrzeugs an mindestens zwei in Fahrtrichtung hintereinanderliegenden Orten festgestellt und die Geschwindigkeit über den Abstand und die Zeit berechnet wird, so dass an mindestens zwei in vorgegebenem Abstand hintereinanderliegenden Messstellen zumindest ein Teil der Fahrzeugkontur erfasst wird.

KR 10 2005 0 048 961 A beschreibt ein Verfahren zum Bestimmen der Geschwindigkeiten von Fahrzeugen, die eine Erfassungseinheit passieren, wobei die Geschwindigkeit der passierenden Fahrzeuge durch eine Messvorrichtung gemessen wird und für den Fall, dass die Anzeige der Geschwindigkeit eines Fahrzeugs eine bestimmte Höchstgeschwindigkeit überschreitet, eine Abbildungs- und Verarbeitungsvorrichtung veranlasst wird, ein erstes Bild und mit einer gewissen Zeitverzögerung aufzunehmen, ein zweites Bild des Fahrzeugs unter Verwendung eines digitalen Bildsensors aufzunehmen, um aus diesen beiden Bildern einen berechneten Wert zu berechnen, und wobei bei der Bestimmung der Geschwindigkeit der Erfassungseinheit die Ablesung und der berechnete Wert berücksichtigt werden, wobei die Zeitverzögerung in Abhängigkeit von der Ablesung der Geschwindigkeit spezifiziert wird.

Vor diesem Hintergrund wird hier ein Verfahren zum Aufzeichnen einer Verkehrssituation bei der Vorbeifahrt eines Fahrzeugs an einem Aufzeichnungsgerät vorgestellt, wobei das Verfahren die folgenden Schritte umfasst:
- Einlesen zumindest eines ersten Bildes, das das Fahrzeug zu einem ersten Zeitpunkt an einer ersten Position in einer Umgebung um das Aufzeichnungsgerät abbildet und eines zweiten Bildes, das das Fahrzeug zu einem zweiten Zeitpunkt an einer zweiten Position in der Umgebung um das Aufzeichnungsgerät abbildet;
- Erfassen einer Geschwindigkeit des Fahrzeugs zum ersten und/oder zweiten Zeitpunkt und/oder in einem Zeitintervall zwischen dem ersten und/oder zweiten Zeitpunkt; und
- Abspeichern des ersten und zweiten Bildes, des ersten und zweiten Zeitpunkts und/oder einer Zeitspanne zwischen dem ersten und dem zweiten Zeitpunkt, sowie der Geschwindigkeit des Fahrzeugs als Verkehrssituationsdatensatz, um die Verkehrssituation aufzuzeichnen, wobei der erste und zweite Zeitpunkt und/oder die Zeitspanne zwischen dem ersten und dem zweiten Zeitpunkt dann dem Verkehrssituationsdatensatz hinzugefügt werden, wenn eine Aufnahme des zweiten Bildes nicht zu einem zweiten Zeitpunkt erfolgt ist, der nach einer vordefinierten Zeitspanne zwischen dem ersten und dem zweiten Zeitpunkt liegt; und wobei im Schritt des Abspeicherns das erste und zweite Bild derart überlagert abgespeichert werden, dass im Verkehrssituationsdatensatz ein einziges Überlagerungsbild generiert wird, bei dem das Fahrzeug zu dem ersten Zeitpunkt an der ersten Position und zu dem zweiten Zeitpunkt an der zweiten Position befindlich abgebildet ist und wobei ein Modelltyp des Fahrzeugs ermittelt und in dem Verkehrssituationsdatensatz abgespeichert wird, wobei der Modelltyp unter Verwendung einer Fahrzeugdatenbank ermittelt wird.

Das erste und zweite Bild können hierbei ein Bild sein, welches mittels einer digitalen Kamera aufgenommen wurde. Dabei wird ein Fahrzeug, beispielsweise ein Personenkraftwagen, ein Lastkraftwagen, ein Motorrad, ein Bus oder dergleichen im dem betreffenden Bild an einer bestimmten Position in einer Umgebung um das Aufzeichnungsgerät abgebildet. Diese Umgebung um das Aufzeichnungsgerät kann beispielsweise ein Straßenabschnitt sein, in welchem die Einhaltung der maximal zulässigen Geschwindigkeit durch die auf diesem Straßenabschnitt fahrenden Fahrzeuge überwacht werden soll. Das erste bzw. das zweite Bild werden hierbei jeweils zum ersten bzw. zweiten Zeitpunkt aufgenommen. Dabei kann der erste Zeitpunkt beispielsweise um die vordefinierte Zeitspanne vor dem zweiten Zeitpunkt liegen. Denkbar ist jedoch auch, dass der erste und zweite Zeitpunkt und/oder einer Zeitspanne zwischen dem ersten und dem zweiten Zeitpunkt in dem Verkehrssituationsdatensatz abgespeichert werden, wenn eine Aufnahme des zweiten Bildes nicht zu einem zweiten Zeitpunkt erfolgt ist, der nach einer vordefinierten Zeitspanne zwischen dem ersten und dem zweiten Zeitpunkt liegt. Ferner erfolgt das Erfassen einer Geschwindigkeit des Fahrzeugs beispielsweise unter Verwendung eines Radarstrahls, eines Laserstrahls oder dergleichen, wobei durch die Verwendung eines solchen Strahls eine sehr präzise Geschwindigkeitsmessung des Fahrzeugs möglich ist. Alternativ oder zusätzlich kann auch die Geschwindigkeit des Fahrzeugs beispielsweise unter Verwendung des Lichtschranken-Prinzips passiv erfasst werden, sodass keine Aussendung von elektromagnetischen Wellen durch das Aufzeichnungsgerät erforderlich ist. Schließlich wird der Verkehrssituationsdatensatz generiert, indem das erste Bild, das zweite Bild und die erfasste Geschwindigkeit des Fahrzeugs miteinander verknüpft und als Datenpaket abgespeichert werden. Denkbar ist beispielsweise auch noch, dass dieser Verkehrssituationsdatensatz mit einem entsprechenden kryptographischen Schlüssel des Aufzeichnungsgeräts signiert wird, um auch einem zweifelnden Fahrer bzw. Richter glaubhaft zu machen, dass die jedem Verkehrssituationsdatensatz enthaltenen Daten tatsächlich vom Aufzeichnungsgerät erfasst bzw. abgespeichert bzw. zu dem Verkehrssituationsdatensatz verknüpft wurden.

Der hier vorgestellte Ansatz basiert auf der Erkenntnis, dass durch das Abspeichern des ersten Bildes und des zweiten Bilds zusammen mit der erfassten Geschwindigkeit ein Verkehrssituationsdatensatz generiert werden kann, bei dem neben der physikalisch sehr präzise ermittelten Geschwindigkeit, beispielsweise durch die Auswertung von aktiv ausgesandten elektromagnetischen Wellen, auch einem Fahrer bzw. Richter grafisch anschaulich gemacht werden kann, dass sich das Fahrzeug während der vorbestimmten Zeitspanne um eine bestimmte Wegstrecke bewegt hat, sodass beispielsweise in einer mündlichen Verhandlung vor Gericht unter Verwendung eines Weg-Messwerkzeugs und eines Rechners eine rechnerische Überprüfung der vom Aufzeichnungsgerät erfassten Geschwindigkeit des Fahrzeugs möglich wird. Auf diese Weise lässt sich mit einfachen Mitteln auch eine Überprüfung der von der Zertifizierungsstelle bzw. dem Eichamt freigegebenen Messeinrichtung des Aufzeichnungsgeräts erfassten Geschwindigkeit durch zweifelnde Fahrer bzw. Richter im konkreten Fall einer Geschwindigkeitsübertretung durch einen Fahrer des Fahrzeugs ermöglichen.

Erfindungsgemäß werden das erste und zweite Bild derart überlagert abgespeichert, dass im Verkehrssituationsdatensatz ein einziges Überlagerungsbild generiert wird, bei dem das Fahrzeug zu dem ersten Zeitpunkt an der ersten Position und zu dem zweiten Zeitpunkt an der zweiten Position befindlich abgebildet ist. Beispielsweise kann ein solches Abspeichern dadurch erfolgen, dass ein erstes digital aufgenommenes Bild und ein zweites digital aufgenommenes Bild digital überlagert werden und somit auf einem gemeinsamen Bild das Fahrzeug zu den jeweils betreffenden ersten und zweiten Zeitpunkten an der jeweiligen ersten und zweiten Position dargestellt wird. Auf diese Weise entsteht in einem einzigen Bild ein dynamischer Fahrteindruck und eine messtechnische Überprüfung der gefahrenen Wegstrecke während der vordefinierten Zeitspanne wird einfach möglich. Dies kann beispielsweise dadurch realisiert werden indem der Abstand zwischen zwei markanten gleichen Komponenten des Fahrzeugs wie beispielsweise Rädern an den unterschiedlichen Positionen gemessen wird und hieraus ein Weg bestimmt wird, den sich das Fahrzeug in der vorbestimmten Zeitspanne bewegt hat. Es lässt sich somit grafisch sehr einfach die vom Fahrzeug durchfahrene Wegstrecke ermitteln, aus welcher sich wiederum unter Zuhilfenahme der vorbestimmten Zeitspanne die aktuelle Geschwindigkeit des Fahrzeugs bestimmen lässt.

Auch kann gemäß einer anderen Ausführungsform des hier vorgestellten Ansatzes (beispielsweise im Schritt des Abspeicherns) im Überlagerungsbild zumindest eine erste Komponente des Fahrzeugs aus dem ersten Bild und die erste Komponente des Fahrzeugs aus dem zweiten Bild markiert werden, insbesondere wobei ferner zumindest eine zweite Komponente des Fahrzeugs aus dem ersten Bild und die zweite Komponente des Fahrzeugs aus dem zweiten Bild markiert werden. Auf diese Weise können vorteilhaft jeweils entsprechende Komponenten des Fahrzeugs im ersten und zweiten Bild eindeutig identifiziert und durch die Markierung eindeutig und leicht vermessen werden.

Weiterhin können gemäß einer Ausführungsform des hier vorgestellten Ansatzes z. B. im Schritt des Abspeicherns die erste und/oder die zweite Komponente aus dem ersten Bild mit der ersten und/oder zweiten Komponente aus dem zweiten Bild durch zumindest eine Linie miteinander verbunden werden. Auf diese Weise lässt sich auch sehr einfach grafisch die Fahrtrichtung des Fahrzeugs in dem Überlagerungsbild darstellen, sodass auch Zweifel hinsichtlich der Messgenauigkeit aufgrund einer ungenauen Ausrichtung des Aufzeichnungsgeräts ausgeräumt werden können.

Günstig ist ferner eine Ausführungsform des hier vorgestellten Ansatzes, bei der z. B. im Schritt des Abspeicherns ein Abstand zwischen einer Position des Fahrzeugs in der Umgebung um das Aufzeichnungsgerät im ersten Bild und einer Position des Fahrzeugs in der Umgebung um das Aufzeichnungsgerät im zweiten Bild unter Verwendung der Position der ersten Komponente im ersten Bild und der Position der ersten Komponenten im zweiten Bild ermittelt wird und/oder unter Verwendung der Position der zweiten Komponente im ersten Bild und der Position der zweiten Komponenten im zweiten Bild in der Umgebung um das Aufzeichnungsgerät ermittelt wird. Eine solche Ausführungsform bietet den Vorteil der leichten grafischen Ermittlung von Abständen zwischen den jeweils betreffenden Komponenten im ersten und zweiten Bild, sodass die Bewegung des Fahrzeugs anhand der Position des Fahrzeugs in dem Überlagerungsbild zum ersten und zweiten Zeitpunkt sehr gut grafisch dargestellt werden kann, wodurch die Überprüfung der gemessenen oder erfassten Geschwindigkeit vereinfacht wird.

Auch kann gemäß einer weiteren Ausführungsform des hier vorgeschlagenen Ansatzes z. B im Schritt des Abspeicherns ein Plausibilisieren der erfassten Geschwindigkeit mit dem ermittelten Abstand zwischen dem Fahrzeugs an der ersten und zweiten Position unter Verwendung der vorbestimmten Zeitspanne , des ersten und/oder zweiten Zeitpunkts erfolgt, wobei ein Ergebnis des Plausibilisierens dem Verkehrssituationsdatensatz hinzugefügt wird. Ein solches Plausibilisieren bietet den Vorteil, die Geschwindigkeit des Fahrzeugs beispielsweise anhand von unterschiedlichen physikalischen Messverfahren zu bestimmen und somit aufgetretene Fehlermessungen zu erkennen, sodass möglichst eine geringe Anzahl von fehlerhaften Bußgeldbescheiden erstellt wird.

Denkbar ist ferner eine Ausführungsform des hier vorgestellten Ansatzes, bei der z. B. im Schritt des Abspeicherns im ersten und/oder zweiten Bild eine Hilfslinie eingefügt wird, die einen Verlauf einer Fahrzeugkomponente quer zur Fahrtrichtung repräsentiert, insbesondere wobei die Hilfslinie einen Verlauf eines Stoßfängers des Fahrzeugs abbildet. Eine solche Ausführungsform des hier vorgeschlagenen Ansatzes bietet den Vorteil, durch den Verlauf der Hilfslinie quer zur Fahrtrichtung ebenfalls grafisch die Bewegung des Fahrzeugs in der Umgebung des Aufzeichnungsgerätes darstellen zu können, sodass für einen zweifelnden Fahrer oder Richter die Richtigkeit der Daten im Verkehrssituationsdatensatz besonders glaubhaft gemacht werden kann.

Erfindungsgemäß wird im Schritt des Abspeicherns ein Modelltyp des Fahrzeugs ermittelt und in dem Verkehrssituationsdatensatz abgespeichert wobei der Modelltyp unter Verwendung einer Fahrzeugdatenbank ermittelt wird. Eine solche Ausführungsform bietet den Vorteil, auf der Basis des ermittelten Modelltyps auch bestimmte Fahrzeuggeometrien, beispielsweise den Radabstand zu erhalten, sodass zusätzliche Informationen vorliegen, um eventuelle unbekannte Größen bei der Bestimmung des Abstands von Bezugspunkten im ersten Bild, zweiten Bild oder Überlagerungsbild aufzulösen. Alternativ oder ergänzend kann der Modelltyp anhand eines Umrisses des Fahrzeugs ermittelt werden.

Besonders genau kann die Geschwindigkeit des Fahrzeugs erfasst werden, wenn gemäß einer Ausführungsform des hier vorgestellten Ansatzes im Schritt des Erfassens die Geschwindigkeit unter Verwendung eines Lidarsystem, eines Radarsystems und/oder eines Kamerasystems als Geschwindigkeitssensor erfolgt.

Um möglichst geringe Fehler bei der Aufzeichnung des Verkehrsgeschehens zu verursachen, kann das erste und zweite Bild von einer Kamera eingelesen werden, deren Standort und/oder Blickrichtung bei der Aufnahme des ersten und zweiten Bild unverändert ist. Hierdurch wird die Verkehrssituation an der ersten und der zweiten Position statisch abgebildet, sodass beispielsweise die Ermittlung des Abstands zwischen dem in der ersten und zweiten Position befindlichen Fahrzeug deutlich vereinfacht werden kann.

Alternativ kann auch gemäß einer weiteren Ausführungsform eine Kamera zur Aufnahme des ersten und zweiten Bildes nach der Aufnahme des ersten Bildes um einen vorbestimmten Winkel gedreht werden, bevor das zweite Bild aufgenommen wird, wobei im Schritt des Abspeicherns der vorbestimmte Winkel in dem Verkehrssituationsdatensatz abgespeichert wird. Denkbar ist auch, dass zur Aufnahme des ersten und zweiten Bildes zwei Kameras verwendet werden, deren Blickrichtung die um den vorbestimmten Winkel gedreht ausgerichtet ist. Eine solche Ausführungsform bietet den Vorteil auch in engen räumlichen Überwachungsbereichen noch eine Verkehrsüberwachung mit hinreichend großem Überwachungsbereich vornehmen zu können, wobei dann eine entsprechende Kompensation dieser Drehung unter Kenntnis des vorbestimmten Winkels bei der Bestimmung des Abstands zwischen dem Fahrzeug in der ersten Position und Fahrzeuge zweiten Position vorgenommen werden sollte.

Um einen besonders genaues Abbild des Verkehrsgeschehens in der Umgebung des Aufzeichnungsgerätes vorzunehmen, kann im Schritt des Einlesens zumindest ein drittes Bild eingelesen werden, das das Fahrzeug zu einem dritten Zeitpunkt an einer dritten Position in der Umgebung um das Aufzeichnungsgerät abbildet, wobei im Schritt des Erfassens eine Geschwindigkeit des Fahrzeugs in einem Zeitintervall zwischen dem ersten, zweiten und/oder dritten Zeitpunkt erfasst wird und wobei im Schritt des Abspeicherns das dritte Bild, des dritten Zeitpunkts und/oder einer Zeitspanne zwischen dem zweiten und dem dritten Zeitpunkt, dem Verkehrssituationsdatensatz hinzugefügt wird, um die Verkehrssituation aufzuzeichnen, wobei der dritte Zeitpunkt und/oder eine Zeitspanne zwischen dem zweiten und dem dritten Zeitpunkt dann dem Verkehrssituationsdatensatz (170) hinzugefügt werden, wenn eine Aufnahme des dritten Bildes nicht zu einem dritten Zeitpunkt erfolgt ist, der nach einer vordefinierten Zeitspanne zwischen dem zweiten und dem dritten Zeitpunkt liegt. Eine solche Ausführungsform bietet den Vorteil, dass durch die Erfassung und Speicherung des dritten Bildes eine weitere Möglichkeit zur Überprüfung der aufgezeichneten Verkehrssituation möglich wird, sodass beispielsweise eine unbrauchbare oder unscharfe Aufnahme des ersten oder zweiten Bildes kompensiert werden kann.

Varianten des hier vorgestellten Verfahrens können beispielsweise in Software oder Hardware oder in einer Mischform aus Software und Hardware beispielsweise in einem Steuergerät implementiert sein.

Der hier vorgestellte Ansatz schafft ferner ein Aufzeichnungsgerät als Vorrichtung, die ausgebildet ist, um die Schritte einer Variante eines hier vorgestellten Verfahrens in entsprechenden Einrichtungen durchzuführen, anzusteuern bzw. umzusetzen. Auch durch diese Ausführungsvariante der Erfindung in Form einer Vorrichtung kann die der Erfindung zugrunde liegende Aufgabe schnell und effizient gelöst werden.

Hierzu kann die Vorrichtung zumindest eine Recheneinheit zum Verarbeiten von Signalen oder Daten, zumindest eine Speichereinheit zum Speichern von Signalen oder Daten, zumindest eine Schnittstelle zu einem Sensor oder einem Aktor zum Einlesen von Sensorsignalen von dem Sensor oder zum Ausgeben von Daten- oder Steuersignalen an den Aktor und/oder zumindest eine Kommunikationsschnittstelle zum Einlesen oder Ausgeben von Daten aufweisen, die in ein Kommunikationsprotokoll eingebettet sind. Die Recheneinheit kann beispielsweise ein Signalprozessor, ein Mikrocontroller oder dergleichen sein, wobei die Speichereinheit ein Flash-Speicher, ein EEPROM oder eine magnetische Speichereinheit sein kann. Die Kommunikationsschnittstelle kann ausgebildet sein, um Daten drahtlos und/oder leitungsgebunden einzulesen oder auszugeben, wobei eine Kommunikationsschnittstelle, die leitungsgebundene Daten einlesen oder ausgeben kann, diese Daten beispielsweise elektrisch oder optisch aus einer entsprechenden Datenübertragungsleitung einlesen oder in eine entsprechende Datenübertragungsleitung ausgeben kann.

Unter einer Vorrichtung kann vorliegend ein elektrisches Gerät verstanden werden, das Sensorsignale verarbeitet und in Abhängigkeit davon Steuer- und/oder Datensignale ausgibt. Die Vorrichtung kann eine Schnittstelle aufweisen, die hard- und/oder softwaremäßig ausgebildet sein kann. Bei einer hardwaremäßigen Ausbildung können die Schnittstellen beispielsweise Teil eines sogenannten System-ASICs sein, der verschiedenste Funktionen der Vorrichtung beinhaltet. Es ist jedoch auch möglich, dass die Schnittstellen eigene, integrierte Schaltkreise sind oder zumindest teilweise aus diskreten Bauelementen bestehen. Bei einer softwaremäßigen Ausbildung können die Schnittstellen Softwaremodule sein, die beispielsweise auf einem Mikrocontroller neben anderen Softwaremodulen vorhanden sind. Von Vorteil ist auch ein Computerprogrammprodukt oder Computerprogramm mit Programmcode, der auf einem maschinenlesbaren Träger oder Speichermedium wie einem Halbleiterspeicher, einem Festplattenspeicher oder einem optischen Speicher gespeichert sein kann und zur Durchführung, Umsetzung und/oder Ansteuerung der Schritte des Verfahrens nach einer der vorstehend beschriebenen Ausführungsformen verwendet wird, insbesondere wenn das Programmprodukt oder Programm auf einem Computer oder einer Vorrichtung ausgeführt wird.

Ein Ausführungsbeispiel des hier vorgestellten Ansatzes wird anhand der beigefügten Figuren näher erläutert. Es zeigt:
Figur 1 eine schematische Darstellung einer Verkehrssituation sowie ein Blockschaltbild eines Aufzeichnungsgeräts zum Aufzeichnen dieser Verkehrssituation in einer Umgebung um das Aufzeichnungsgerät;
Figur 2 eine Darstellung eines Überlagerungsbildes, wie es beispielsweise als Teil des Verkehrssituationsdatensatzes generiert wird; und
Figur 3 ein Ablaufdiagramm eines Verfahrens zum Aufzeichnen einer Verkehrssituation.

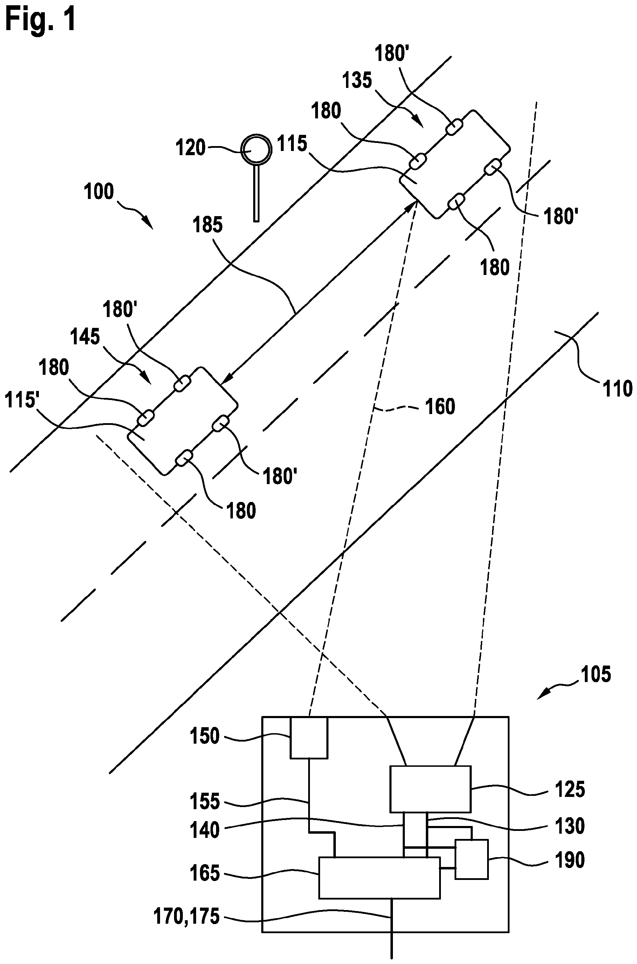

Figur 1 zeigt eine eine schematische Darstellung einer Verkehrssituation 100 sowie ein Blockschaltbild eines Aufzeichnungsgeräts 105 zum Aufzeichnen dieser Verkehrssituation 100 in einer Umgebung um das Aufzeichnungsgerät 105. Auf einer Fahrbahn 110, die beispielsweise einen Straßenabschnitt repräsentiert, auf der ein Fahrzeug 115 fährt, ist beispielsweise eine Maximalgeschwindigkeit zulässig, die durch ein Verkehrszeichen 120 angezeigt ist. Fährt nun beispielsweise das Fahrzeug 115 zu schnell, begeht der Fahrer dieses Fahrzeugs 115 eine unzulässige Geschwindigkeitsübertretung, die durch eine zuständige Behörde oder ein Gericht geahndet werden soll. Um nun diese Geschwindigkeitsübertretung möglichst gut zu dokumentieren und einem Fahrer bzw. einem Richter das tatsächliche Vorliegen dieser Geschwindigkeitsübertretung nachvollziehbar zu machen, wird gemäß dem hier vorgestellten Ansatz das vorteilhafte Aufzeichnungsgerät 105 verwendet. In diesem Aufzeichnungsgerät 105 ist hierzu zumindest eine Kamera 125 vorgesehen, die zu einem ersten Zeitpunkt ein erstes Bild 130 des Fahrzeugs 115 an einer ersten Position 135 aufnimmt und zu einem zweiten Zeitpunkt ein zweites Bild 140 des Fahrzeugs 115' an der zweiten Position 145 aufnimmt. Der zweite Zeitpunkt liegt hierbei um eine vorbestimmte, bekannte oder zumindest ermittelbare Zeitspanne nach dem ersten Zeitpunkt, sodass unter Verwendung dieser bekannten Zeitspanne und einer tatsächlich überwundenen Wegstrecke durch das Fahrzeug 115 von der ersten Position 135 zur zweiten Position 145 eine Fahrtgeschwindigkeit des Fahrzeugs 115 ermittelt werden kann. Ferner umfasst das Aufzeichnungsgerät 105 einen Geschwindigkeitssensor 150, um die Geschwindigkeit des Fahrzeugs 115 an der ersten Position 135 (wie es in der Figur 1 dargestellt ist), der zweiten Position 145 oder in einem Bereich zwischen der ersten Position 135 und der zweiten Position 145 zu erfassen und einen entsprechenden Geschwindigkeitswert 155 auszugeben. Der Geschwindigkeitssensor 150 kann hierbei unter Verwendung eines Radarstrahls 160 und/oder eines Laserstrahls die Geschwindigkeit des Fahrzeugs 115 erfassen. Alternativ oder zusätzlich kann auch der Geschwindigkeitssensor 150 auf der Basis eines Lichtschranken-Messprinzips oder eines in einer Fahrbahn eingebrachten Sensors/Sensorsystems basieren, wobei dieser Geschwindigkeitssensor dann auch beispielsweise als Teilkomponente des Aufzeichnungsgeräts 105 abgesetzt am Fahrbahnrand aufgestellt werden kann. Eine weitere Alternative ist die Verwendung eines optischen Sensors für eine eine Mehrbild-Stereo-Messung. Der Unterschied dabei ist im Vergleich zum vorgeschlagenen Verfahren, dass unterschiedliche Größen (Kalibrierung, Ausrichtung, Objektmaß) als bekannt bzw. unbekannt angenommen werden können. Die Verwendung eines derartigen Geschwindigkeitssensors 150 zur Bestimmung der aktuellen Geschwindigkeit des Fahrzeugs 115 gegenüber der Auswertung aus mehreren Bildern bietet den Vorteil, physikalische Prinzipien ausnutzen zu können, die sich sehr gut zur zuverlässigen Erfassung einer Geschwindigkeit des Fahrzeugs 115 eignen. Eine weitere Alternative zur Ermittlung der Geschwindigkeit kann über eine Pixelverschiebung der Bildaufnahmen auch ohne zusätzlichen Geschwindigkeitssensor erfolgen. Somit dient der Bildsensor als Geschwindigkeitsmesssensor.

Ferner umfasst das Aufzeichnungsgerät eine Abspeichereinheit 165, in welcher das erste Bild 130, das zweite Bild 140 sowie ein die Geschwindigkeit des Fahrzeugs 115 repräsentierenden Geschwindigkeitswert 155 zu einem Verkehrssituationsdatensatzes 170 verknüpft und abgespeichert werden. Gegebenenfalls kann in der Abspeichereinheit 165 auch noch dieser Verkehrssituationsdatensatz 170 mit einer dem Aufzeichnungsgerät 105 individuellen elektronischen Signatur versehen sein, um zuverlässig verifizieren zu können, ob der Verkehrssituationsdatensatz 170 nach dem Auslesen aus dem Aufzeichnungsgerät 105 manipuliert wurde. In diesem Verkehrssituationsdatensatz 170 kann hierbei ein Überlagerungsbild 175 enthalten sein, indem das erste Bild 130 und das zweite Bild 140 überlagert dargestellt sind, sodass in einem einzigen Bild das Fahrzeug 115 an der ersten Position 135 bzw. das Fahrzeug 115' in der zweiten Position 145 abgebildet ist. Hierdurch lässt sich in sehr einfacher Weise in einem Bild eine Wegstrecke grafisch ermitteln, die das Fahrzeug 115 während der vorbestimmten Zeitspanne zurückgelegt hat, sodass hierdurch die Geschwindigkeit des Fahrzeugs 115 überprüft werden kann und beispielsweise die vom Geschwindigkeitssensor 150 erfasste und dem Geschwindigkeitswert 155 entsprechende Geschwindigkeit verifiziert werden kann. Das Überlagerungsbild 175 kann beispielsweise als digitale Überlagerung des ersten Bilds 130 mit dem zweiten Bild 140 generiert werden, wenn das erste Bild 130 und das zweite Bild 140 von einem digitalen Sensor als Kamera 125 aufgenommen wurden. Denkbar ist jedoch auch, dass bei Verwendung einer analogen Kamera 125, die beispielsweise auf der Verwendung von fotochemischen Filmmaterial für die Erstellung des ersten Bildes 130 und des zweiten Bildes 140 basiert, dieses Filmmaterial zum ersten Zeitpunkt und zum zweiten Zeitpunkt doppelt belichtet wird, sodass das Fahrzeug 115 zum ersten Zeitpunkt an der ersten Position 135 und zum zweiten Zeitpunkt an der zweiten Position 145 abgebildet wird. In diesem Fall würde dann beispielsweise der Geschwindigkeitswert 155 als digitale Anzeige in diesem Überlagerungsbild 175 bei zumindest eine Aufnahme des ersten Bildes 130 und/oder des zweiten Bildes 140 eingeblendet, sodass als Verkehrssituationsdatensatz 170 dann das mit dem Geschwindigkeitswert 155 versehene Überlagerungsbild 175 verstanden werden kann. Alternativ oder zusätzlich können auch der erste und zweite Zeitpunkt und/oder eine Zeitspanne zwischen dem ersten und dem zweiten Zeitpunkt in dem Verkehrssituationsdatensatz 170 abgespeichert werden, um hieraus die Zeitspanne zwischen der Aufnahme des ersten und zweiten Bildes ermitteln oder entnehmen zu können. Es ist also nicht erforderlich, dass eine vorab definierte Zeitspanne vorliegen muss, die angibt wie weit die Aufnahmen des ersten und zweiten Bildes zeitlich auseinanderliegen müssen/dürfen. Das Abspeichern des ersten und zweiten Zeitpunkts und/oder er Zeitspanne zwischen dem ersten und dem zweiten Zeitpunkt in dem Verkehrssituationsdatensatz 170 kann auch beispielsweise nur dann erfolgen, wenn in einem Betriebsmodus es Aufzeichnungsgerätes diese Zeitspanne zwischen der Aufnahme des ersten und zweiten Bildes nicht vordefiniert ist.

Es werden somit mindestens zwei Bilder einer Szene bzw. der Verkehrssituation 100 angefertigt, durch welche sich ein Objekt, hier das Fahrzeug 115, bewegt. Die Zeitdifferenz als vorbestimmte Zeitspanne zwischen den Bildaufnahmen ist bekannt. Die Bewegung des Objektes bzw. hier des Fahrzeugs 115 wird als geradlinig angenommen. Position und Ausrichtung der Kamera 125 werden als konstant angenommen. Es ist angestrebt, die Geschwindigkeit des Objektes bzw. des Fahrzeugs 115 zu rekonstruieren. Über die Kamera 125 brauchen keine Parameter bekannt zu sein. Position, Blickrichtung, Brennweite, weitere intrinsische Parameter können ebenfalls unbekannt bleiben. Am Objekt wie hier dem Fahrzeug sind beispielsweise zwei Merkmale wie die genannten Komponenten identifizierbar in der Form, dass diese beiden Merkmale kollinear sind zur Bewegungsrichtung des Objektes bzw.

Fahrzeugs 115. Der Abstand der beiden Merkmale ist recherchierbar bekannt. Als Komponenten können hier beispielsweise Räder 180 des Fahrzeugs 115 dienen. Der Abstand dieser Räder 180 des Fahrzeugs 115 ist als Radstand durch die Identifizierung des Modelltyps des Fahrzeugs 115 zumindest identifizierbar bekannt. Abweichungen von den obigen Annahmen sollen eine Schätzung der Geschwindigkeit nicht verhindern. Ein solcher Modelltyp des Fahrzeugs 115 kann beispielsweise dadurch ermittelt werden, dass in dem Aufzeichnungsgerät 105 eine Datenbank 190 hinterlegt (oder online zugreifbar ist), aus der beispielsweise unter Ausnutzung der aus dem ersten Bild 130 und/oder dem zweiten Bild 140 erhaltenen Konturen des Fahrzeugs 115 das Modell/der Hersteller des Fahrzeugs 115 bestimmt und hierbei aus den in der Datenbank 190 hinterlegten technischen Daten der Radabstand ausgelesen wird. Ein derart ermittelter Radabstand kann dann beispielsweise ebenfalls in der Abspeichereinheit 165 dem Verkehrssituationsdatensatz 170 hinzugefügt und abgespeichert werden, sodass bei einer nachfolgenden Auswertung dieser Radabstand direkt zur Verfügung gestellt werden kann.

Durch den hier vorgestellten Ansatz kann die vom Objekt bzw. Fahrzeug 115 zurückgelegte Strecke als Abstand 185 rekonstruiert werden. Zusammen mit der bekannten Zeitdifferenz ergibt sich hieraus die Rekonstruktion der Geschwindigkeit des Objektes bzw. Fahrzeugs 115, die dann auch grafisch aus dem Überlagerungsbild 175 verifiziert werden kann, wenn dem Geschwindigkeitswert 115 kein Vertrauen entgegengebracht wird.

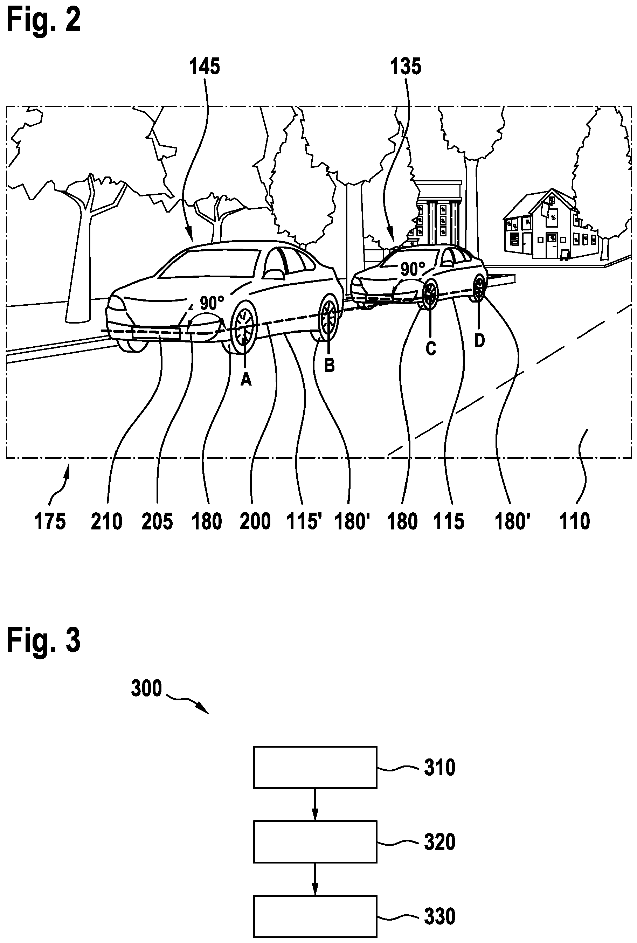

Figur 2 zeigt eine Darstellung eines Überlagerungsbildes 175, wie es beispielsweise als Teil des Verkehrssituationsdatensatzes 170 generiert wird. Der hier vorgestellte Ansatz nutzt dabei die Invarianz des Kreuzverhältnisses eines durch eine Gerade geschnittenen Strahlenbüschels, wie es aus der projektiven Geometrie bekannt ist ("cross ratio of line pencil"). Zwei aufeinander folgende Bilder wie das erste Bild 130 und das zweite Bild 140 werden überblendet. Der Hintergrund bleibt dabei günstigerweise konstant. Das sich bewegt habende Objekt, hier das Fahrzeug 115 an der ersten Position 135 bzw. 115' an der zweiten Position 145, erscheint somit an zwei verschiedenen Stellen im kombinierten Bild (Überlagerungsbild) 175. Die beiden besonderen Merkmale, hier beispielsweise die Räder 180 des Fahrzeugs 115 lassen sich nun im kombinierten Bild, aufgrund der getroffenen Annahmen, durch eine Gerade oder Linie 200 verbinden. Weiterhin sind dort nun vier Punkte A, B, C und D im kombinierten Bild/Überlagerungsbild 175 relevant, jeweils zwei aus den Einzelbildern erstes Bild 130 und zweites Bild 140. Diese Punkte entsprechen den Positionen der Achsmittelpunkte der Räder 180 des Fahrzeugs 115 in der ersten Position 135 bzw. zweiten Position 145. Werden die Abstände der vier Punkte A, B, C, D betrachtet, so ist nur eine Strecke unbekannt, die Strecke BC, wie es aus der Figur 2 entnehmbar ist. Die Strecken AB und CD sind als recherchierbar bekannt angenommen, beispielsweise als dem Radstand des Modelltyps des Fahrzeugs 115.

Es lässt sich nun mit den Punkten A, B, C und D aus der kombinierten Bildaufnahme/dem Überlagerungsbild 175 das Kreuzverhältnis berechnen. Das Kreuzverhältnis ist invariant unter den gegebenen Voraussetzungen: I = (AC*BD)/(BC*AD).

Das Kreuzverhältnis gilt in selbiger Form für dieselben Punkte A, B, C, D in Weltkoordinaten. Die Strecken AB = CD können als bekannt angenommen werden, z. B. als Radstand eines Fahrzeuges 115. Die Strecke BC ist nun die einzige Unbekannte in der Formel des Kreuzverhältnisses in Weltkoordinaten. Es ergibt sich eine quadratische Gleichung, die auf üblichem Wege nach der gesuchten Strecke BC aufgelöst werden kann.

Die berechnete Strecke BC in Summe mit der bekannten Strecke AB ergibt die Gesamtstrecke, welche eines der beiden Merkmale zurückgelegt hat. Dies ist auch die vom Objekt bzw. Fahrzeug 115 zurückgelegte Strecke als dem Abstand 185.

Für die Verwendung von mehr als zwei Bildern wie dem ersten Bild 130 und dem zweiten Bild 140 in dem Verkehrssituationsdatensatz 170 werden die Geschwindigkeiten beispielsweise paarweise bezogen auf die jeweils verwendeten Bilder berechnet, hier unter Ausnutzung der vorbekannten Zeitspanne, die jeweils zwischen den Aufnahmen der beiden verwendeten Bildern vergangen ist.

Für Fahrzeuge kann somit ein Verfahren entwickelt werden, um mit Datenbankanbindung (beispielsweise zur Datenbank 190 aus Figur 1) und automatischer Modellerkennung das bekannte Maß wie dem Rad(ab)stand automatisch zu ermitteln. Somit kann auch die Geschwindigkeitsberechnung unter Verwendung des Abstands zwischen dm Fahrzeugs 115 an der ersten Position 135 und dem Fahrzeugs 115' an der zweiten Position 145 automatisch erfolgen, wodurch ferner eine Plausibilitätsprüfung der durch den Geschwindigkeitssensor 150 ermittelten Geschwindigkeit ermöglicht wird.

Für eine manuelle Rekonstruktion können auch beliebige Punkte am Objekt bzw. hier dem Fahrzeugs 115 gewählt werden, die kollinear zur Bewegungsrichtung sind und deren Abstand recherchierbar bekannt ist. Insbesondere die Fahrzeuglänge stellt eine gut plausibilisierbare Alternative zum Radstand dar.

Sehr vorteilhaft ist der hier vorgestellte Ansatz dadurch, dass es sich um eine sehr einfach umzusetzende Lösung für eine Geschwindigkeitsschätzung aus zwei Bildern oder noch günstiger aus beispielsweise einem Doppelfoto handelt. Dabei wird kein Wissen über die aufnehmende Kamera 125 benötigt. Die Strecken AC, BD, BC, AD werden aus den Pixelkoordinaten der Bilder 13 bzw. 140 oder des Überlagerungsbildes 175 berechnet. Damit ist das invariante Kreuzverhältnis I bekannt. Der Radstand des Fahrzeuges 115 wird beispielsweise vorliegend zu 2,60 m recherchiert, d. h. die Strecke AB = CD = 2,6. Die Strecke BC kann dann beispielsweise zu 6,96 m berechnet werden. Hierbei können auch noch perspektivische Verzerrungen berücksichtigt werden, die durch den Verlauf und die Steigung der Linien im Überlagerungsbild 175 einen Hinweis darauf geben, in welchem Winkel die Kamera 125 zur Fahrbahn 110 bzw. der Fahrtrichtung des Fahrzeugs 115 ausgerichtet wird. Mit der gegebenen Zeitdifferenz des Doppelbildes von 0,8 s als vorbestimmter Zeitspanne ergibt sich beispielsweise die Geschwindigkeit zu 43,04 km/h.

Der hier vorgestellte Ansatz selbst soll dabei im Wesentlichen nur eine "visualisierte Schätzung" ermöglichen, welche dem Kunden, beschuldigten Fahrern und/oder den Gerichten den Vorfall "quasi-dynamisch" visualisiert; die tatsächliche Geschwindigkeitsmessung sollte durch die Verwendung des von dem Geschwindigkeitssensor 150 aus Figur 1 erfolgen, da dieser Sensor besonders gut für die Geschwindigkeitsmessung geeignete physikalische Parameter auswerten kann, auch wenn diese sich nur ungenügend für eine menschliche Auswertung eignen. Ein besonderer Vorteil der Visualisierung ist, dass das Fahrzeug 115 an mindestens zwei Positionen erfasst werden kann und die beiden Bilder (es können auch mehr als zwei sein) in einer Überblendung als Überlagerungsbild 175 in ein und demselben Foto präsentiert werden. Dabei verläuft geometrische Linienführung in Fahrtrichtung - d. h. es brauchen keine geometrischen Beziehungen z. B. durch Vermessung des Kennzeichens erfolgen, welche das Auge des Betrachters ablenken könnten. Dennoch kann auch das erste Bild 130 und das zweite Bild 140 separat abgespeichert und der Abstand 185 des Fahrzeugs 115 zwischen den beiden Positionen 135 und 145 beispielsweise unter Rückgriff auf den Abstand des Fahrzeugs 115 in der jeweiligen Position 135 bzw. 145 zu einem Objekt in der Umgebung des Fahrzeugs 115, beispielsweise einen Baum oder ein Verkehrszeichen ermittelt werden. Auch kann eine Hilfslinie 205 in eines der Bilder 130 bzw. 140 eingefügt werden, das eine Fahrzeugkomponente 210 des Fahrzeugs 115 wie beispielsweise den Stoßfängers repräsentiert, der im Wesentlichen quer zur Fahrtrichtung des Fahrzeugs 115 ausgerichtet ist. Mit dieser Linie 200 kann verdeutlicht werden, dass die Fahrt des Fahrzeugs 115 quasi geradlinig war, da nun auch ein Winkelbezug (hier beispielsweise 90°) z. B. zur Stoßstangenkante visualisiert wird. Der Winkelbezug ist speziell dann besonders vorteilhaft, wenn belegt werden soll, dass es sich bei dem Weg zwischen der ersten Position 135 und der zweiten Position 145 um eine gerade Strecke handelt, da die Geschwindigkeitsermittlung voraussetzt, dass das Fahrzeug 115 zwischen den Aufnahmezeitpunkten des ersten Bildes 130 und des zweiten Bildes 140 eine gerade Strecke zurückgelegt hat.

Durch den hier vorgestellten Ansatz wird somit eine einfache und effiziente Methode des sogenannten zweiten Beweises ermöglicht. Es wird eine kunden- und gerichtsfreundliche Darstellung der Verkehrssituation günstigerweise auf nur einem einzigen Bild, dem Überlagerungsbild 175, durch Mehrfachbelichtung/Überlagerung generiert, wobei diese Darstellung brennweitenunabhängig von der Kamera 125 ist. Es können ferner beliebige, fahrzeugspezifische Geometriedaten wie Fahrzeuglängen oder Achsabstände verwendet werden, die beispielsweise nach einer Ermittlung des Modelltyps des konkret an dem Aufzeichnungsgerät 105 vorbeifahrenden Fahrzeugs 115 aus einer Datenbank 190 bereitgestellt werden kann. Auf diese Weise wird sehr einfach eine Geschwindigkeitsrekonstruktion aus dem Überlagerungsbild als AB-Foto mit z. B. Radstandsdaten sowie der Kenntnis der vorbestimmten Zeitspanne möglich.

Figur 3 zeigt ein Ablaufdiagramm eines Verfahrens 300 zum Aufzeichnen einer Verkehrssituation bei der Vorbeifahrt eines Fahrzeugs an einem Aufzeichnungsgerät. Das Verfahren umfasst einen Schritt 310 des Einlesens zumindest eines ersten Bildes, das das Fahrzeug zu einem ersten Zeitpunkt an einer ersten Position in einer Umgebung um das Aufzeichnungsgerät abbildet und eines zweiten Bildes, das das Fahrzeug zu einem zweiten Zeitpunkt an einer zweiten Position in der Umgebung um das Aufzeichnungsgerät abbildet. Ferner umfasst das Verfahren 300 einen Schritt 320 des Erfassens einer Geschwindigkeit des Fahrzeugs zum ersten und/oder zweiten Zeitpunkt und/oder in einem Zeitintervall zwischen dem ersten und/oder zweiten Zeitpunkt. Schließlich umfasst das Verfahren 300 einen Schritt 330 des Abspeicherns des ersten und zweiten Bildes, des ersten und zweiten Zeitpunks und/oder einer Zeitspanne zwischen dem ersten und dem zweiten Zeitpunkt, sowie der Geschwindigkeit des Fahrzeugs als Verkehrssituationsdatensatz, um die Verkehrssituation aufzuzeichnen, wobei der erste und zweite Zeitpunkt und/oder die Zeitspanne zwischen dem ersten und dem zweiten Zeitpunkt dann dem Verkehrssituationsdatensatz hinzugefügt werden, wenn eine Aufnahme des zweiten Bildes nicht zu einem zweiten Zeitpunkt erfolgt ist, der nach einer vordefinierten Zeitspanne zwischen dem ersten und dem zweiten Zeitpunkt liegt.

Umfasst ein Ausführungsbeispiel eine "und/oder"-Verknüpfung zwischen einem ersten Merkmal und einem zweiten Merkmal, so ist dies so zu lesen, dass das Ausführungsbeispiel gemäß einer Ausführungsform sowohl das erste Merkmal als auch das zweite Merkmal und gemäß einer weiteren Ausführungsform entweder nur das erste Merkmal oder nur das zweite Merkmal aufweist

## Patentansprüche

1. Verfahren (300) zum Aufzeichnen einer Verkehrssituation (100) bei der Vorbeifahrt eines Fahrzeugs (115) an einem Aufzeichnungsgerät (105), wobei das Verfahren (300) die folgenden Schritte umfast:
- Einlesen (310) zumindest eines ersten Bildes (130), das das Fahrzeug (115) zu einem ersten Zeitpunkt an einer ersten Position (135) in einer Umgebung um das Aufzeichnungsgerät (105) abbildet und eines zweiten Bildes (140), das das Fahrzeug (115) zu einem zweiten Zeitpunkt an einer zweiten Position (145) in der Umgebung um das Aufzeichnungsgerät (105) abbildet,;
- Erfassen (320) einer Geschwindigkeit des Fahrzeugs (115) zum ersten und/oder zweiten Zeitpunkt und/oder in einem Zeitintervall zwischen dem ersten und/oder zweiten Zeitpunkt; und
- Abspeichern (330) des ersten (130) und zweiten Bildes (140), des ersten und zweiten Zeitpunks und/oder einer Zeitspanne zwischen dem ersten und dem zweiten Zeitpunkt, sowie der Geschwindigkeit des Fahrzeugs (115) als Verkehrssituationsdatensatz (170), um die Verkehrssituation (100) aufzuzeichnen, wobei der erste und zweite Zeitpunkt und/oder die Zeitspanne zwischen dem ersten und dem zweiten Zeitpunkt dann dem Verkehrssituationsdatensatz (170) hinzugefügt werden, wenn eine Aufnahme des zweiten Bildes (140) nicht zu einem zweiten Zeitpunkt erfolgt ist, der nach einer vordefinierten Zeitspanne zwischen dem ersten und dem zweiten Zeitpunkt liegt, **dadurch gekennzeichnet, dass** im Schritt (330) des Abspeicherns das erste (130) und zweite (140) Bild derart überlagert abgespeichert werden, dass im Verkehrssituationsdatensatz (170) ein einziges Überlagerungsbild (175) generiert wird, bei dem das Fahrzeug (115) zu dem ersten Zeitpunkt an der ersten Position (135) und zu dem zweiten Zeitpunkt an der zweiten Position (145) befindlich abgebildet ist und ein Modelltyp des Fahrzeugs (115) ermittelt und in dem Verkehrssituationsdatensatz (170) abgespeichert wird, wobei der Modelltyp unter Verwendung einer Fahrzeugdatenbank (190) ermittelt wird .

2. Verfahren (300) gemäß Anspruch 1, **dadurch gekennzeichnet, dass** im Schritt (330) des Abspeicherns im Überlagerungsbild (175) und/oder im ersten Bild zumindest eine erste Komponente (180) des Fahrzeugs (115) aus dem ersten Bild (130) und im Überlagerungsbild (175) und/oder im zweiten Bild (140) die erste Komponente (180) des Fahrzeugs (115) aus dem zweiten Bild (140) markiert werden, insbesondere wobei ferner zumindest eine zweite Komponente (180`) des Fahrzeugs (115) aus dem ersten Bild (130) und die zweite Komponente (180`) des Fahrzeugs (115) aus dem zweiten Bild (140) markiert werden.

3. Verfahren (300) gemäß einem der vorangegangenen Ansprüche, **dadurch gekennzeichnet, dass** die erste (180) und/oder die zweite (180`) Komponente aus dem ersten Bild (130) mit der ersten (180) und/oder zweiten (180) Komponente aus dem zweiten Bild (140) durch zumindest eine Linie (200) miteinander verbunden werden.

4. Verfahren (300) gemäß einem der vorangegangenen Ansprüche, **dadurch gekennzeichnet, dass** ein Abstand zwischen einer Position des Fahrzeugs (115) in der Umgebung um das Aufzeichnungsgerät (105) im ersten Bild (130) und einer Position des Fahrzeugs (115) in der Umgebung um das Aufzeichnungsgerät (105) im zweiten Bild (140) unter Verwendung der Position der ersten Komponente (180) im ersten Bild (130) und der Position der ersten Komponenten (180) im zweiten Bild (140) ermittelt wird und/oder unter Verwendung der Position der zweiten Komponente (180`) im ersten Bild (130) und der Position der zweiten Komponenten (180`) im zweiten Bild (140) in der Umgebung um das Aufzeichnungsgerät (105) ermittelt wird.

5. Verfahren (300) gemäß Anspruch 4, **dadurch gekennzeichnet, dass** ein Plausibilisieren der erfassten Geschwindigkeit mit dem ermittelten Abstand (185) zwischen dem Fahrzeug (115) an der ersten (135) und zweiten (145) Position unter Verwendung der Zeitspanne, des ersten und/oder zweiten Zeitpunkts erfolgt, wobei ein Ergebnis des Plausibilisierens dem Verkehrssituationsdatensatz (170) hinzugefügt wird.

6. Verfahren (300) gemäß einem der vorangegangenen Ansprüche, **dadurch gekennzeichnet, dass** im ersten (130) und/oder zweiten (140) Bild eine Hilfslinie (205) eingefügt wird, die einen Verlauf einer Fahrzeugkomponente (210) quer zur Fahrtrichtung repräsentiert, insbesondere wobei die Hilfslinie (205) einen Verlauf eines Stoßfängers des Fahrzeugs (115) abbildet.

7. Verfahren (300) gemäß einem der vorangegangenen Ansprüche, **dadurch gekennzeichnet, dass** ein Modelltyp des Fahrzeugs (115) ermittelt und in dem Verkehrssituationsdatensatz (170) abgespeichert wird, wobei der Modelltyp anhand eines Umrisses des Fahrzeugs (115) ermittelt wird.

8. Verfahren (300) gemäß einem der vorangegangenen Ansprüche, **dadurch gekennzeichnet, dass** im Schritt (320) des Erfassens die Geschwindigkeit des Fahrzeugs (115) unter Verwendung eines Laser- und/oder Lidarsystems, eines Radarsystems und/oder eines Kamerasystems und/oder Bildsensors als Geschwindigkeitssensor (150) erfasst wird.

9. Verfahren (300) gemäß einem der vorangegangenen Ansprüche, **dadurch gekennzeichnet, dass** das erste (130) und zweite (140) Bild von einer Kamera (125) eingelesen werden, deren Standort und/oder Blickrichtung bei der Aufnahme des ersten (130) und zweiten (140) Bild unverändert ist.

10. Verfahren (300) gemäß einem der vorangegangenen Ansprüche, **dadurch gekennzeichnet, dass** eine Kamera (125) zur Aufnahme des ersten (130) und zweiten (140) Bildes nach der Aufnahme des ersten Bildes (130) um einen vorbestimmten Winkel gedreht wird, bevor das zweite Bild (130) aufgenommen wird, wobei im Schritt (320) des Abspeicherns der vorbestimmte Winkel in dem Verkehrssituationsdatensatz (170) abgespeichert wird.

11. Verfahren (300) gemäß einem der vorangegangenen Ansprüche, **dadurch gekennzeichnet, dass** im Schritt (310) des Einlesens zumindest ein drittes Bild eingelesen wird, das das Fahrzeug (115) zu einem dritten Zeitpunkt an einer dritten Position in der Umgebung um das Aufzeichnungsgerät (105) abbildet, wobei im Schritt (320) des Erfassens eine Geschwindigkeit des Fahrzeugs (115) in einem Zeitintervall zwischen dem ersten, zweiten und/oder dritten Zeitpunkt erfasst wird und wobei im Schritt (330) des Abspeicherns das dritte Bild, des dritten Zeitpunkts und/oder einer Zeitspanne zwischen dem zweiten und dem dritten Zeitpunkt, dem Verkehrssituationsdatensatz (170) hinzugefügt wird, um die Verkehrssituation (100) aufzuzeichnen, wobei der dritte Zeitpunkt und/oder eine Zeitspanne zwischen dem zweiten und dem dritten Zeitpunkt dann dem Verkehrssituationsdatensatz (170) hinzugefügt werden, wenn eine Aufnahme des dritten Bildes nicht zu einem dritten Zeitpunkt erfolgt ist, der nach einer vordefinierten Zeitspanne zwischen dem zweiten und dem dritten Zeitpunkt liegt.

12. Aufzeichnungsgerät (105), das eingerichtet ist, um die Schritte des Verfahrens (300) gemäß einem der vorangegangenen Ansprüche in entsprechenden Einheiten (125, 150, 165) auszuführen und/oder anzusteuern.

13. Computerprogramm, das dazu eingerichtet ist, die Schritte des Verfahrens (300) gemäß einem der vorangegangenen Ansprüche auszuführen und/oder anzusteuern.

14. Maschinenlesbares Speichermedium, auf dem das Computerprogramm nach Anspruch 13 gespeichert ist.

## Claims

1. Method (300) for recording a traffic situation (100) when a vehicle (115) drives past a recording device (105), the method (300) comprising the following steps:
- reading in (310) at least one first image (130) which depicts the vehicle (115) at a first point in time at a first position (135) in a region surrounding the recording device (105) and a second image (140) which displays the vehicle (115) at a second point in time at a second position (145) in the region surrounding the recording device (105);
- detecting (320) a speed of the vehicle (115) at the first and/or second point in time and/or at a time interval between the first and/or the second point in time; and
- storing (330) the first image (130) and the second image (140), the first and second points in time and/or a time period between the first and the second point in time, and the speed of the vehicle (115) as a traffic situation data record (170) in order to record the traffic situation (100), the first and second points in time and/or the time period between the first and the second point in time then being added to the traffic situation data record (170) if the second image (140) has not been captured at a second point in time that is after a predefined time period between the first and the second point in time, **characterized in that** in the storing step (330), the first image (130) and the second image (140) are stored so as to be superimposed on one another in such a way that in the traffic situation data record (170) a single superposition image (175) is generated in which the vehicle (115) is depicted at the first point in time at the first position (135) and at the second point in time at the second position (145), and a model type of the vehicle (115) is determined and stored in the traffic situation data record (170), the model type being determined using a vehicle database (190).

2. Method (300) according to claim 1, **characterized in that** in the storing step (330), in the superposition image (175) and/or in the first image at least one first component (180) of the vehicle (115) from the first image (130) is marked and in the superposition image (175) and/or in the second image (140) the first component (180) of the vehicle (115) from the second image (140) is marked, in particular wherein in addition at least one second component (180') of the vehicle (115) from the first image (130) is marked and the second component (180') of the vehicle (115) from the second image (140) is marked.

3. Method (300) according to either of the preceding claims,
**characterized in that** the first component (180) and/or the second component (180') from the first image (130) is/are connected to the first component (180) and/or the second component (180) from the second image (140) by at least one line (200).

4. Method (300) according to any of the preceding claims,
**characterized in that** a distance between a position of the vehicle (115) in the region surrounding the recording device (105) in the first image (130) and a position of the vehicle (115) in the region surrounding the recording device (105) in the second image (140) is determined using the position of the first component (180) in the first image (130) and the position of the first component (180) in the second image (140), and/or is determined using the position of the second component (180') in the first image (130) and the position of the second component (180') in the second image (140) in the region surrounding the recording device (105).

5. Method (300) according to claim 4, **characterized in that** a plausibility check of the detected speed with the determined distance (185) between the vehicle (115) at the first position (135) and the second position (145) is carried out using the time period, of the first and/or second point in time, wherein a result of the plausibility check is added to the traffic situation data record (170).

6. Method (300) according to any of the preceding claims,
**characterized in that** in the first image (130) and/or the second image (140) an auxiliary line (205) is inserted which represents a course of a vehicle component (210) transversely to the direction of travel, in particular wherein the auxiliary line (205) depicts a course of a bumper of the vehicle (115).

7. Method (300) according to any of the preceding claims,
**characterized in that** a model type of the vehicle (115) is determined and stored in the traffic situation data record (170), wherein the model type is determined on the basis of a contour of the vehicle (115).

8. Method (300) according to any of the preceding claims,
**characterized in that** in the detection step (320), the speed of the vehicle (115) is detected using a laser and/or lidar system, a radar system, and/or a camera system, and/or image sensor as a speed sensor (150).

9. Method (300) according to any of the preceding claims,
**characterized in that** the first image (130) and the second image (140) are read in by a camera (125), the location and/or viewing direction of which is/are unchanged when the first image (130) and the second image (140) are captured.

10. Method (300) according to any of the preceding claims,
**characterized in that** a camera (125) for capturing the first image (130) and the second image (140) is rotated at a predetermined angle after the first image (130) has been captured, before the second image (130) is captured, wherein the predetermined angle is stored in the traffic situation data record (170) in the storing step (320).

11. Method (300) according to any of the preceding claims,
**characterized in that** in the reading step (310), at least one third image is read in, which depicts the vehicle (115) at a third point in time at a third position in the region surrounding the recording device (105), wherein in the detection step (320), a speed of the vehicle (115) is detected at a time interval between the first, second and/or third point in time, and wherein in the storing step (330), the third image, of the third time point and/or a time period between the second and the third point in time, is added to the traffic situation data record (170) in order to record the traffic situation (100), wherein the third point in time and/or a time period between the second and the third point in time is then added to the traffic situation data record (170) if the third image has not been captured at a third point in time between the second and the third point in time.

12. Recording device (105) which is configured to execute and/or control the steps of the method (300) according to any of the preceding claims in corresponding units (125, 150, 165).

13. Computer program which is configured to execute and/or control the steps of the method (300) according to any of the preceding claims.

14. Machine-readable storage medium, in which the computer program according to claim 13 is stored.

## Revendications

1. Procédé (300) d'enregistrement d'une situation de circulation (100) lors du passage d'un véhicule (115) devant un appareil d'enregistrement (105), dans lequel le procédé (300) comprend les étapes suivantes :
- lecture (310) d'au moins une première image (130) qui représente le véhicule (115) à un premier moment à une première position (135) dans un environnement autour de l'appareil d'enregistrement (105) et une deuxième image (140) qui représente le véhicule (115) à un deuxième moment à une deuxième position (145) dans l'environnement autour de l'appareil d'enregistrement (105) ;
- mesure (320) de la vitesse du véhicule (115) au premier et/ou au deuxième moment et/ou dans un intervalle de temps entre le premier et/ou le deuxième moment ; et
- sauvegarde (330) de la première (130) et de la deuxième image (140), du premier et du deuxième moment et/ou d'une période entre le premier et le deuxième moment, ainsi que de la vitesse du véhicule (115) comme ensemble de données de situation de circulation (170) pour enregistrer la situation de circulation (100), dans lequel le premier et le deuxième moment et/ou la période entre le premier et le deuxième moment sont ensuite ajoutés à l'ensemble de données de situation de circulation (170) lorsqu'un enregistrement de la deuxième image (140) n'est pas effectué à un deuxième moment après une période prédéfinie entre le premier et le deuxième moment, **caractérisé en ce que,** à l'étape (330) de sauvegarde, la première (130) et la deuxième (140) image sont sauvegardées par superposition de telle sorte que, dans l'ensemble de données de situation de circulation (170), une seule image superposée (175) est générée, image dans laquelle le véhicule (115) est représenté comme se trouvant au premier moment à la première position (135) et au deuxième moment à la deuxième position (145) et un type de modèle du véhicule (115) est déterminé et sauvegardé dans l'ensemble de données de situation de circulation (170), dans lequel le type de modèle est déterminé au moyen d'une base de données de véhicules (190).

2. Procédé (300) selon la revendication 1, **caractérisé en ce que,** à l'étape (330) de sauvegarde, au moins un premier composant (180) du véhicule (115), provenant de la première image (130), est marqué dans l'image superposée (175) et/ou dans la première image et le premier composant (180) du véhicule (115) provenant de la deuxième image (140) est marqué dans l'image superposée (175) et/ou dans la deuxième image (140), en particulier dans lequel en outre au moins un second composant (180') du véhicule (115), provenant de la première image (130), et le second composant (180') du véhicule (115), provenant de la deuxième image (140), sont marqués.

3. Procédé (300) selon l'une des revendications précédentes,
**caractérisé en ce que** le premier (180) et/ou le second (180') composant provenant de la première image (130) sont reliés, par l'intermédiaire d'au moins une ligne (200), au premier (180) et/ou au second (180) composant provenant de la deuxième image (140).

4. Procédé (300) selon l'une des revendications précédentes,
**caractérisé en ce qu'**une distance entre une position du véhicule (115) dans l'environnement autour de l'appareil d'enregistrement (105) dans la première image (130) et une position du véhicule (115) dans l'environnement autour de l'appareil d'enregistrement (105) dans la deuxième image (140) est déterminée à l'aide de la position du premier composant (180) dans le première image (130) et de la position du premier composant (180) dans la deuxième image (140) et/ou est déterminée à l'aide de la position du second composant (180') dans la première image (130) et de la position du second composant (180') dans la deuxième image (140) dans l'environnement autour de l'appareil d'enregistrement (105).

5. Procédé (300) selon la revendication 4, **caractérisé en ce qu'**un calcul de probabilité de la vitesse mesurée à l'aide de la distance (185) déterminée entre le véhicule (115) à la première (135) et à la deuxième (145) position est effectué à l'aide de la période, du premier et/ou du deuxième moment, dans lequel un résultat du calcul de probabilité est ajouté à l'ensemble de données de situation de circulation (170).

6. Procédé (300) selon l'une des revendications précédentes,
**caractérisé en ce qu'**une ligne auxiliaire (205) est insérée dans la première (130) et/ou la deuxième (140) image, laquelle ligne auxiliaire représente un tracé d'un composant de véhicule (210), transversalement à la direction de déplacement, en particulier dans lequel la ligne auxiliaire (205) représente un tracé d'un pare-choc du véhicule (115).

7. Procédé (300) selon l'une des revendications précédentes,
**caractérisé en ce qu'**un type de modèle du véhicule (115) est déterminé et sauvegardé dans l'ensemble de données de situation de circulation (170), dans lequel le type de modèle est déterminé à partir d'un contour du véhicule (115).

8. Procédé (300) selon l'une des revendications précédentes,
**caractérisé en ce que,** à l'étape (320) de mesure, la vitesse du véhicule (115) est mesurée à l'aide d'un système laser et/ou lidar, d'un système radar et/ou d'un système de caméra et/ou capteur d'image comme capteur de vitesse (150).

9. Procédé (300) selon l'une des revendications précédentes,
**caractérisé en ce que** la première (130) et la deuxième (140) image sont lues par une caméra (125) dont l'emplacement et/ou la ligne de visée demeure inchangé(e) lors de l'enregistrement de la première (130) et de la deuxième (140) image.

10. Procédé (300) selon l'une des revendications précédentes,
**caractérisé en ce qu'**une caméra (125) pour l'enregistrement de la première (130) et de la deuxième (140) image est tournée à un angle prédéterminé après l'enregistrement de la première image (130) avant l'enregistrement de la deuxième image (130), dans lequel, à l'étape (320) de sauvegarde, l'angle prédéterminé est sauvegardé dans l'ensemble de données de situation de circulation (170).

11. Procédé (300) selon l'une des revendications précédentes,
**caractérisé en ce que,** à l'étape (310) de lecture, au moins une troisième image est lue, laquelle représente le véhicule (115) à un troisième moment à une troisième position dans l'environnement autour de l'appareil d'enregistrement (105), dans lequel, à l'étape (320) de mesure, une vitesse du véhicule (115) est mesurée dans un intervalle de temps entre le premier, le deuxième et/ou le troisième moment et dans lequel, à l'étape (330) de sauvegarde, la troisième image, du troisième moment et/ou d'une période entre le deuxième et le troisième moment, est ajoutée à l'ensemble de données de situation de circulation (170) pour enregistrer la situation de circulation (100), dans lequel le troisième moment et/ou une période entre le deuxième et le troisième moment sont ensuite ajoutés à l'ensemble de données de situation de circulation (170) lorsqu'un enregistrement de la troisième image n'est pas effectué au troisième moment après une période prédéfinie entre le deuxième et le troisième moment.

12. Appareil d'enregistrement (105) conçu pour exécuter et/ou commander les étapes du procédé (300) selon l'une des revendications précédentes dans des unités correspondantes (125, 150, 165).

13. Programme informatique conçu pour exécuter et/ou commander les étapes du procédé (300) selon l'une des revendications précédentes.

14. Support de stockage lisible par machine, sur lequel le programme informatique selon la revendication 13 est mémorisé.
